# EUROPEAN PATENT SPECIFICATION

(11) **EP 4 387 024 B1**
(45) Date of publication and mention of the grant of the patent: **11.11.2026**
(21) Application number: 23213763.8
(22) Date of filing: 01.12.2023
(51) Int. Cl.: H02H 3/093, H02H 7/06

(54) **RESIDUAL OVERCURRENT PROTECTION**
RESTÜBERSTROMSCHUTZ
PROTECTION CONTRE LES SURINTENSITÉS RÉSIDUELLES

(30) Priority: 02.12.2022 US 202218073901
(43) Date of publication of application: 19.06.2024
(73) Proprietor: Hamilton Sundstrand Corporation, Charlotte, NC 28217-4578 (US)
(72) Inventor: HASSEMAN, Matthew R., Poplar Grove, IL (US); LANMAN Jr., Mark Andrew, Loves Park, IL (US); GOOD, Jef William, German Valley, IL (US)
(74) Representative: Dehns

(56) References cited:
- CA-A1- 2 045 043
- US-A1- 2018 294 643

## Description

### BACKGROUND

Embodiments described herein generally relate to aircraft, and more specifically, to residual overcurrent protection for a generator of an aircraft.

An aircraft may include a generator (or multiple generators) that generate electrical power. The electrical power is distributed to different components and systems within an aircraft that consume the electrical power. Over current protection for a generator protects electrical loads and aircraft infrastructure from higher than expected currents. A method of overcurrent protection is taught in US 2018/294643 A1.

### BRIEF DESCRIPTION

In one aspect of the present invention, a method for residual overcurrent protection is provided as defined by claim 1.

Embodiments of the method may include that determining the count value further includes updating the previous count value using a one clockcycle delay.

Embodiments of the method may include that detecting the overcurrent condition includes comparing the count value and the residual overcurrent limit.

Embodiments of the method may include, responsive to determining that the count value is greater than or equal to the residual overcurrent limit, setting an input of a reset-over-set type latch to true.

Embodiments of the method may include resetting the reset-over-set type latch responsive to a reset input being set to true.

In another aspect of the present invention an aircraft is provided as defined by claim 7.

Embodiments of the aircraft may include that determining the count value further includes updating the previous count value using a one clockcycle delay.

Embodiments of the aircraft may include that detecting the overcurrent condition includes comparing the count value and the residual overcurrent limit.

Embodiments of the aircraft may include, responsive to determining that the count value is greater than or equal to the residual overcurrent limit, setting an input of a reset-over-set type latch to true.

Embodiments of the aircraft may include resetting the reset-over-set type latch responsive to a reset input being set to true.

In yet another aspect of the present invention a controller is provided as defined by claim 6.

The above features and advantages, and other features and advantages, of the disclosure are readily apparent from the following detailed description when taken in connection with the accompanying drawings.

### BRIEF DESCRIPTION OF THE DRAWINGS

The following descriptions are of examples only. The scope of the invention is as defined by the claims. With reference to the accompanying drawings, like elements are numbered alike:
FIG. 1 is a block diagram of an overcurrent protection logic according to one or more embodiments described herein;
FIG. 2 is a graph showing a running residual count over time according to one or more embodiments described herein;
FIG. 3 is a graph showing a running residual count over time according to one or more embodiments described herein;
FIG. 4A is a block diagram of an increment per clock cycle logic for residual overcurrent protection according to one or more embodiments described herein;
FIG. 4B is a block diagram of a decrement per clock cycle logic for residual overcurrent protection according to one or more embodiments described herein;
FIG. 4C is a block diagram of a counter logic for residual overcurrent protection according to one or more embodiments described herein;
FIG. 4D is a block diagram of an overcurrent fault logic for residual overcurrent protection according to one or more embodiments described herein;
FIG. 5 is a graph showing a running residual count over time with an overcurrent fault (no decrement) according to one or more embodiments described herein; and
FIG. 6 is a block diagram of an aircraft according to one or more embodiments described herein.

### DETAILED DESCRIPTION

A detailed description of one or more embodiments of the disclosed apparatus and method are presented herein by way of exemplification and not limitation with reference to the Figures.

One or more embodiments described herein provide for residual overcurrent protection, for example, for a generator of an aircraft. Over current protection for a generator protects electrical loads and aircraft infrastructure from higher than expected currents. A generator overcurrent (OC) protection function uses current inputs monitored by generator current transformers (CTs).

From a systems architecture and design perspective, the failures and aircraft conditions that can cause a generator OC fault can include: loads applied can exceed source capability, which can be caused by improper load management (automated or pilot induced) and/or another generator in the system being tripped/failed causing the remaining generator(s) to source additional loads; a generator control unit (GCU) or controller issue, such as a sense circuit error, measurement error, and/or the like, including combinations and/or multiples thereof; and/or a "low" impedance fault in an unprotected area (e.g., not in a differential protection zone).

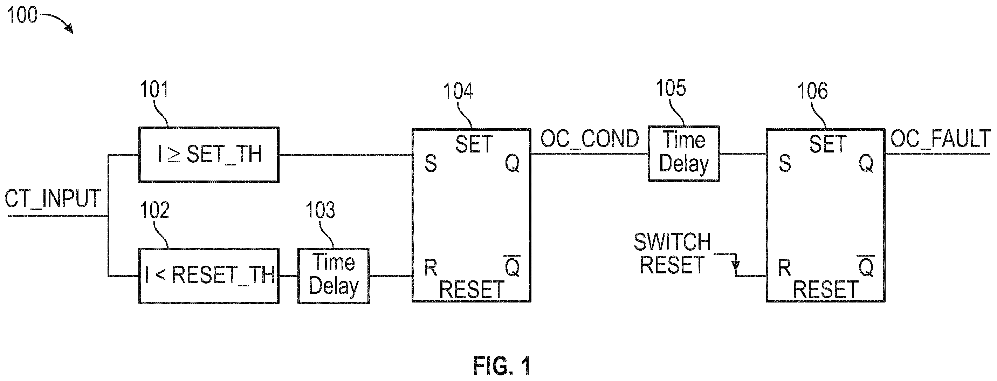

One approach to overcurrent protection is shown in FIG. 1. Particularly, FIG. 1 is a block diagram of an overcurrent protection logic 100 according to one or more embodiments described herein. In this example, the logic 100 sets an overcurrent condition (OC_COND) at block 104 when the generator current (CT_INPUT or "I") exceeds a defined set threshold (SET_TH) at block 101. The overcurrent fault (OC_FAULT) is then set at block 106 once the overcurrent condition has been present for a predefined time delay (time delay at block 105). If the current (CT_INPUT or "I") drops below a reset threshold (RESET_TH) at block 102 for a specified amount of time (time delay 103), the overcurrent condition (OC_COND) is reset at block 104 and the process repeats.

The type of overcurrent protection shown in FIG. 1 can be vulnerable to a system condition where currents repeatedly exceed the set threshold for less than the fault time delay and then drop below the reset threshold for longer than the reset threshold. If this configuration persists for an extended time, then the power source is susceptible to overheating and degradation due to usage beyond its intended limits, leading to a failure rate higher or quicker than expected. An example of this is a cyclical aircraft load that is applied on top of a higher-based load such as 90% of a rated load. If the cyclical load is 20% of the rated load, then the generator senses currents cyclically exceeding the overcurrent set threshold, and if the cycle on time of the load is less than the overcurrent fault time delay, then the generator is exceeding its intended capabilities and subject to degradation and potential early failures.

One possible solution is to implement a thermal circuit breaker (TCB) or a fuse; however, each of these approaches has its own inherent challenges and adds to the overall part count of the system.

According to one or more embodiments described herein, a generator controller can perform residual overcurrent protection. Utilizing the generator controller provides for an aircraft airframer to reduce total component count and provide weight savings for the aircraft.

According to one or more embodiments described herein, residual over current protection is implemented based on the dynamics of thermal conductivity. Thermal conductivity is the property of a material to accumulate or dissipate heat over time. In a traditional device, when a high current passes through a TCB or a fuse, the conducting element will heat up and eventually activate when its thermal threshold is exceeded. However, if the current is reduced before the TCB or fuse activates, then the conducting element will begin to cool without activating and opening the circuit. If this process repeats over time, and the duty cycle of the thermal threshold as exceeded is more than the ability of the conducting element to cool when the thermal threshold as not exceeded, then the TCB or fuse will be activated to protect the system.

Similarly, residual overcurrent protection makes the fault time a function of the rate of time spent above a set threshold minus the rate of time spent below a reset threshold. This functionality is accomplished in the following way according to one or more embodiments. A timing variable is incremented at a defined rate (*Iᵣₐₜₑ*) when the current is above the set threshold and not yet exceeding the overcurrent time delay. The same timing variable is decremented at a defined rate (*Dᵣₐₜₑ*) when the current drops below the reset threshold and not yet exceeding the overcurrent time delay, with a minimum count of 0. If the current is oscillating between the set and reset thresholds but maintaining an average current rate above trip threshold, the fault is set when the residual of timer increments and decrements (*Count_{T}*) has exceeded the defined fault time delay. The timing variable can be expressed mathematically via the following formulae (1), (2), and (3): ${Count}_{T} = {\sum }_{t = 0}^{T} \left({I}_{{bool}_{t}}∗{I}_{{rate}_{t}}\right) - \left({D}_{{bool}_{t}}∗{D}_{{rate}_{t}}\right)$ (1) ${I}_{bool} = \left\{\begin{matrix}1 & If Input Curent > Set Threshold AND Count < OC Time Delay \\ 0 & Otherwise\end{matrix}\right.$ (2) ${D}_{bool} = \left\{\begin{matrix}1 & If Input Curent < Reset Threshold AND OC Time Delay > Count > 0 \\ 0 & Otherwise\end{matrix}\right.$ (3)

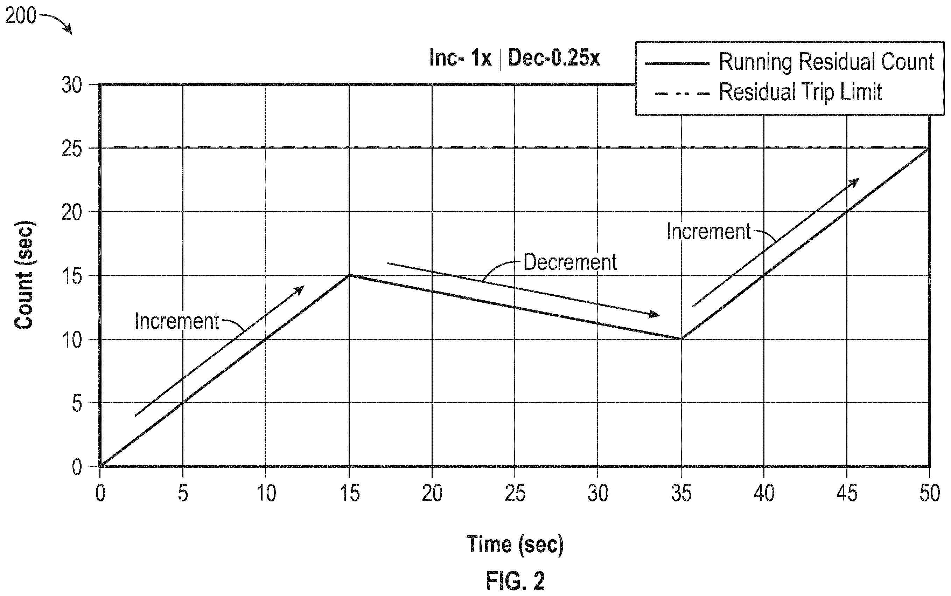

Modeling the conductive properties of a TCB or fuse lies in the rate at which the timers are incremented and decremented. By causing the incrementing rate to be greater than the decrementing rate, the dynamics of a circuit that heats up quickly and cools off slowly can be replicated, as shown in FIG. 2. Particularly, FIG. 2 is a graph 200 showing a running residual count over time (1x-0.25x) according to one or more embodiments described herein. The graph 200 illustrates a trip curve where the running residual is increased at a 1x rate and decreased at a 0.25x rate. In this example, a loading pattern of an overload (increment) for 15 seconds followed by overload removal (decrement) for 20 seconds and a subsequent overload (increment) for 15 seconds results in the residual overcurrent protection activating in 50 seconds.

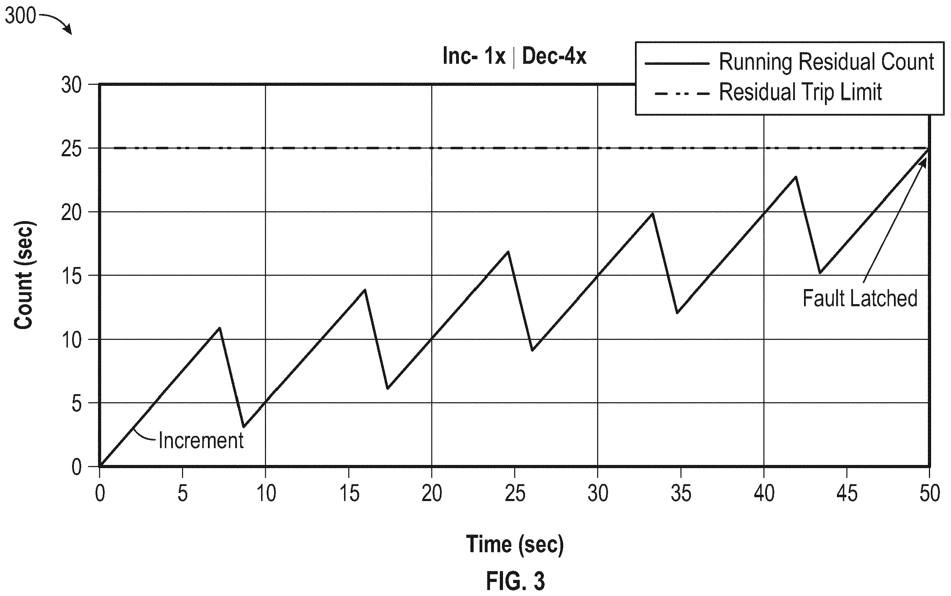

If the cooler element has high capabilities, such as a generator in an oil-cooled circuit environment, then the running residual thermal characteristics may be biased in a reversed direction where the running residual is increased at a 1x rate and decreased at a 4x rate, as shown in FIG. 3. Particularly, FIG. 3 is a graph 300 showing a running residual count over time (1x-4x) according to one or more embodiments described herein. In this example, a cyclical loading pattern of an overload (increment) for 11 seconds followed by overload removal (decrement) for 2 seconds results in the residual overcurrent protection activating in 75 seconds.

One or more embodiments described herein provides a highly customizable design that can replicate the environment into which the design is to be implemented. Thermal characteristics can be analyzed to design a robust implementation solution that is designed to minimize nuisances of the activation residual overcurrent protection while protecting the generator from long term exposure of fluctuating loads or intermittent downstream faults.

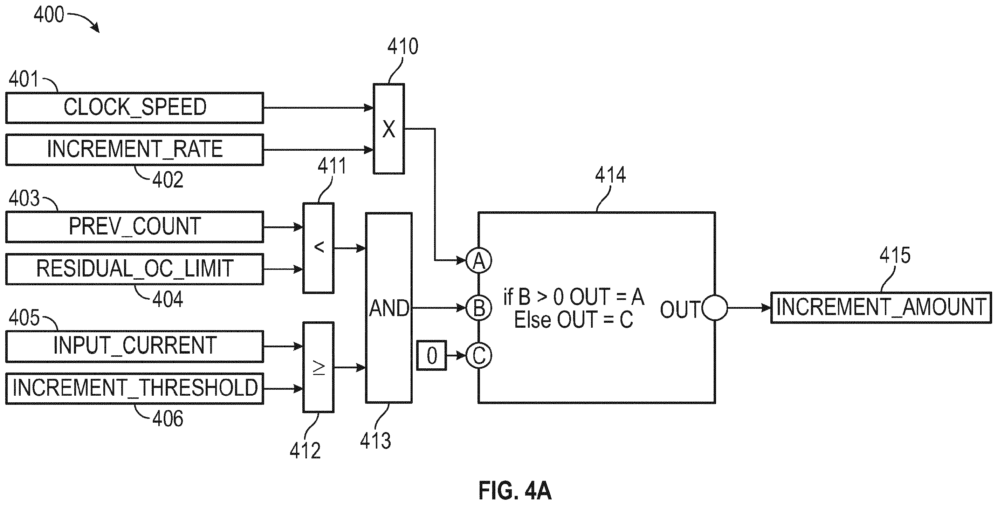

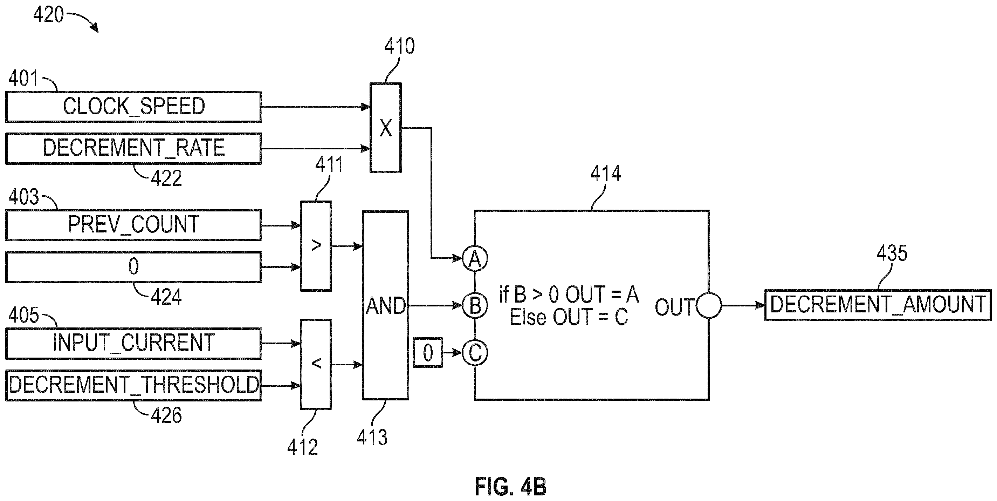

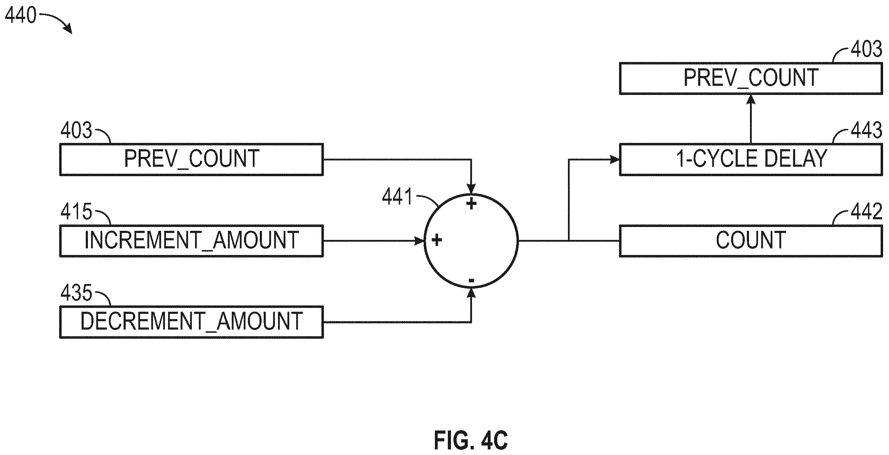

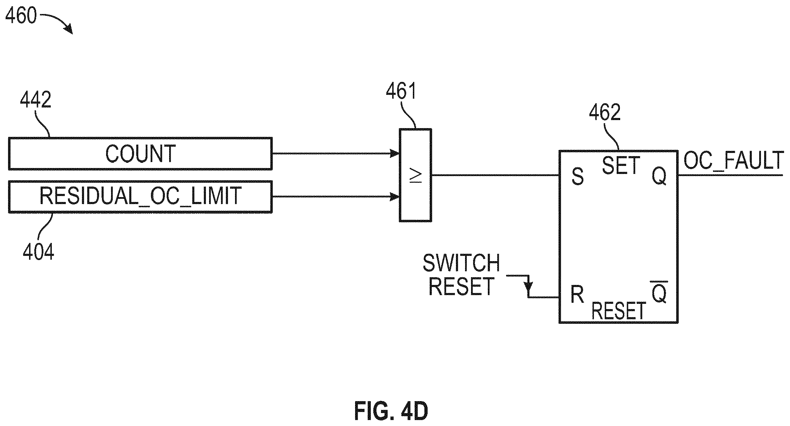

FIG. 4A-4D together depict logic for residual overcurrent protection according to one or more embodiments described herein. Residual overcurrent protection is performed as follows. First, an increment amount (FIG. 4A) and a decrement amount (FIG. 4B) for residual overcurrent protection are determined. Next, based on the increment amount, the decrement amount, and a previous count value, a count value is determined (FIG. 4C). Using the count value and a residual over current limit, an overcurrent condition is detected (FIG. 4D), and a generator can be controlled to correct the overcurrent condition responsive to detecting the overcurrent condition (e.g., current can be reduced). Residual over current protection is now described in more detail with reference to FIGS. 4A-4D.

FIG. 4A is a block diagram of an increment per clock cycle logic 400 for residual overcurrent protection according to one or more embodiments described herein. The logic 400 determines an increment amount 415 based on the following inputs: clock speed 401, increment rate 402, previous count 403 (also referred to as a "previous count value"), residual overcurrent limit 404, input current 405, and increment threshold 406. The clock speed 401 may be any suitable speed, such as substantially 5ms or less. The increment rate 402 defines the timing dynamics of the protection the value of the count at the previous clock cycle, referred to as the previous count 403. The residual overcurrent limit 404 is the number at which the protection will latch the fault. The input current 405 is sensed by the generator current transformers. The increment threshold 406 defines at what input current level the count variable should be counting up.

As shown in FIG. 4A, the clock speed 401 and the increment rate 402 are multiplied by multiplier 410. The lesser (determined at block 411) of the previous count 403 and the residual overcurrent limit 404 is input into AND gate 413 as a first input, and the greater than or equal value (determined at block 412) between the input current 405 and the increment threshold 406 is input into the AND gate 413 as a second input. Outputs from the multiplier 410 and the AND gate 413 are input into inputs A and B, respectively, of logic block 414. The logic block 414 determines whether B is greater than 0. If so, the logic block 414 outputs A as the increment amount 415. If B is not greater than 0, a value (e.g., "0") received at an input C to the logic block 414 is output as the increment amount 415.

FIG. 4B is a block diagram of a decrement per clock cycle logic 420 for residual overcurrent protection according to one or more embodiments described herein. The logic 420 determines a decrement amount 435 based on the following inputs: the clock speed 401, a decrement rate 422, the previous count 403, a constant value 424, the input current 405, and a decrement threshold 426. The decrement rate 422 defines the timing dynamics of how quickly the protection "cools off." The constant value 424 can be any suitable value, such as "0" or another value. The decrement threshold 426 defines at what input current level the count variable should be counting down.

As shown in FIG. 4B, the clock speed 401 and the decrement rate 422 are multiplied by multiplier 410. The greater (determined at block 411) of the previous count 403 and the constant value 424 is input into AND gate 413 as a first input, and the lesser value (determined at block 412) between the input current 405 and the decrement threshold 426 is input into the AND gate 413 as a second input. Outputs from the multiplier 410 and the AND gate 413 are input into inputs A and B, respectively, of logic block 414. The logic block 414 determines whether B is greater than 0. If so, the logic block 414 outputs A as the decrement amount 435. If B is not greater than 0, a value (e.g., "0") received at an input C to the logic block 414 is output as the decrement amount 435.

The increment amount 415 (FIG. 4A) and the decrement amount 435 (FIG. 4B) can be used to determine a count 442 (also referred to as a "count value") as shown in FIG. 4C, which corresponds to equation 1 for calculating the count 442 as described above. Particularly, FIG. 4C is a block diagram of a counter logic 440 for residual overcurrent protection according to one or more embodiments described herein. The count from the previous clock cycle (e.g., the previous count 403) is summed with the increment amount 415 and the decrement amount 435 at adder 441. If the input current 405 is not greater than or equal to the increment threshold 406, then the increment amount 415 will be zero. If the input current 405 is above the increment threshold 406, then the count 442 will increase by (clock speed 401) x (increment rate 402). The decrement amount 435 functions the same way such that if the input current 405 is greater than the decrement threshold 426, then the decrement amount 435 will be zero. If the input current 405 is less the decrement threshold 426, then the count 442 will be decreased by (clock speed 401) x (decrement rate 422). Also, the previous count 403 is updated using a 1-cycle delay 443.

Turning now to FIG. 4D, a block diagram of an overcurrent fault logic 460 for residual overcurrent protection is shown according to one or more embodiments described herein.

The count 442 is compared to the residual overcurrent limit 404 at block 461. If the count 442 is greater than or equal to the residual overcurrent limit 404, then the input is set to true for a reset-over-set type latch 462 to latch the overcurrent fault. The fault will remain "true" or "set" until the reset input (e.g., "reset switch") is set to true (e.g., a switch reset for an aircraft generator protection reset), at which point the overcurrent fault is set to "false" (un-latched). When an overcurrent fault occurs, the generator controller can open the generator line contactor to remove power from the electrical system that was sourced by the generator experiencing the overload current. This action protects the electrical system that was sourced by the generator by eliminating the current overload, thus improving the operation of the aircraft by improving reliability.

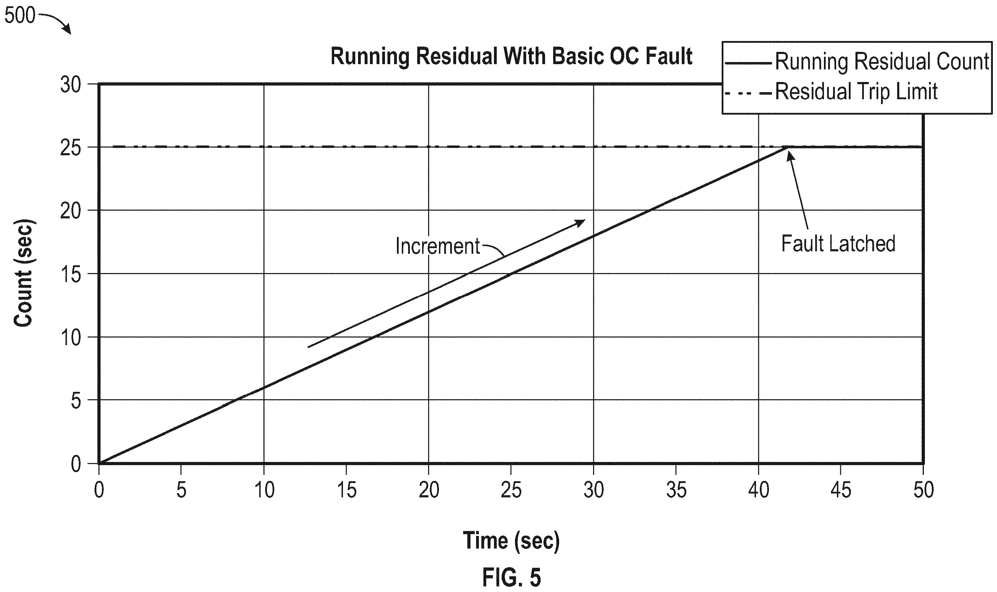

In addition to providing protection from short repeated overcurrent conditions, the residual overcurrent protection logic shown in FIGS. 4A-4D encompasses the generator overcurrent protection design. The logic for an overcurrent protection illustrated in FIG. 1, where conventional overcurrent protection logic is captured within the residual overcurrent protection logic as the timer will increment to the residual overcurrent limit without decrementing. An illustration for this scenario is shown in FIG. 5. Particularly, FIG. 5 is a graph 500 showing a running residual count over time with an overcurrent fault (no decrement) according to one or more embodiments described herein. In this example, an overload (increment) for 25 seconds without pause (no decrement) results in the residual overcurrent protection activating in 25 seconds, which is substantially the same as the response of an existing normal overcurrent protection.

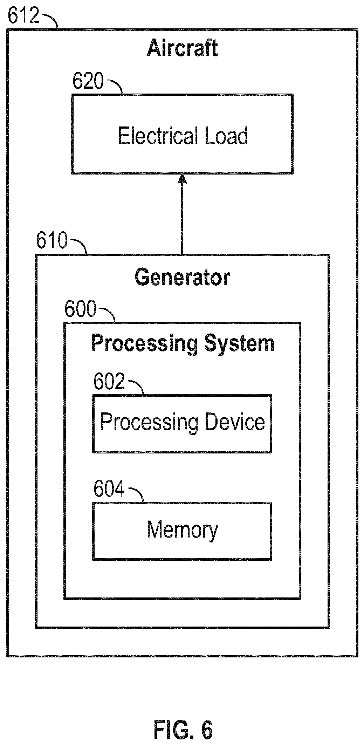

FIG. 6 is a block diagram of an aircraft 612 according to one or more embodiments described herein. The aircraft 612 includes a generator 610 that generates electrical power and supplies electrical power to an electrical load 620. The generator 610 includes a processing system 600 (e.g., also referred to as a "controller" or "generator controller"). It is understood that one or more embodiments described herein is capable of being implemented in conjunction with any other type of computing environment now known or later developed. The processing system 600 can include a processing device 602, which may be one or more processing units. In aspects of the present disclosure, each processing unit can include a reduced instruction set computer (RISC) microprocessor. As another example, the processing device 602 can be a special-purpose processing device, such as application specific hardware, application specific integrated circuits (ASICs), application specific special processors (ASSPs), field programmable gate arrays (FPGAs), embedded controllers, hardwired circuitry, and/or the like, including combinations and/or multiples thereof. The processing device 602 can be coupled to memory 604, which can be any suitable type of memory device for storing data temporarily (e.g., random access memory (RAM)) and/or persistently (e.g., read only memory (RAM). According to aspects of the present disclosure, the residual overcurrent protection described herein can be implemented using a combination of hardware and programming. The programming can be processor executable instructions stored on a tangible memory, and the hardware can include the processing device 602 for executing those instructions. Thus a system memory (e.g., memory 604) can store program instructions that when executed by the processing device 602 implement the residual overcurrent protection described herein.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method for residual overcurrent protection performed by a generator controller, the method comprising:
sensing an input current (405) of the generator controller;
determining an increment amount for residual overcurrent protection based on a clock speed, an increment rate, the previous count value, the residual overcurrent limit, the input current, and an increment threshold, wherein the increment amount is determined by:
multiplying the clock speed (401) and the increment rate (402),
inputting the lesser of the previous count (403) and the residual overcurrent limit (404) into an AND gate (413) as a first input;
inputting the greater of the input current (405) and the increment threshold (406) into the AND gate as a second input;
inputting the result of the multiplication and the output from the AND gate as respective inputs to a logic block (414);
determining by the logic block if the output from the AND gate is greater than 0 and:
if so, outputting the result of the multiplication as the increment amount;
if not, outputting a value 0 received at the logic block (414) as the increment amount (415);
determining a decrement amount for residual overcurrent protection based on the clock speed, a decrement rate, the previous count value, a constant value, the input current, and a decrement threshold;
wherein the decrement amount is determined by:
multiplying the clock speed (401) and the decrement rate (422),
inputting the greater of the previous count (403) and the constant value (424) into the AND gate (413) as a first input;
inputting the lesser of the input current (405) and the decrement threshold (426) into the AND gate as a second input;
inputting the result of the multiplication and the output from the AND gate as respective inputs to the logic block (414);
determining by the logic block if the output from the AND gate is greater than 0 and:
if so, outputting the result of the multiplication as the decrement amount;
if not, outputting a value 0 received at the logic block (414) as the decrement amount (435);
determining a count value based on the increment amount, the decrement amount, and a previous count value;
detecting an overcurrent condition based on the count value and a residual overcurrent limit; and
controlling the generator to open a generator line contactor to remove power from an electrical system sourced by the generator to correct the overcurrent condition responsive to detecting the overcurrent condition.

2. The method of claim 1, wherein determining the count value further comprises updating the previous count value using a one clock cycle delay.

3. The method of any preceding claim, wherein detecting the overcurrent condition comprises comparing the count value and the residual overcurrent limit.

4. The method of claim 3, further comprising, responsive to determining that the count value is greater than or equal to the residual overcurrent limit, setting an input of a reset-over-set type latch to true.

5. The method of claim 4, further comprising resetting the reset-over-set type latch responsive to a reset input being set to true.

6. A controller configured to perform the following:
sensing an input current (405) of the generator controller;
determining an increment amount for residual overcurrent protection based on a clock speed, an increment rate, the previous count value, the residual overcurrent limit, the input current, and an increment threshold, wherein the increment amount is determined by:
multiplying by a multiplier (410) the clock speed (401) and the increment rate (402),
inputting the lesser of the previous count (403) and the residual overcurrent limit (404) into an AND gate (413) as a first input;
inputting the greater of the input current (405) and the increment threshold (406) into the AND gate as a second input;
inputting the result of the multiplication and the output from the AND gate as respective inputs to a logic block (414);
determining by the logic block if the output from the AND gate is greater than 0 and:
if so, outputting the result of the multiplication as the increment amount;
if not, outputting a value 0 received at the logic block (414) as the increment amount (415);
determining a decrement amount for residual overcurrent protection based on the clock speed, a decrementing rate, the previous count value, a constant value, the input current, and a decrement threshold;
wherein the decrement amount is determined by:
multiplying by the multiplier (410) the clock speed (401) and the decrement rate (422),
inputting the greater of the previous count (403) and the constant value (424) into the AND gate (413) as a first input;
inputting the lesser of the input current (405) and the decrement threshold (426) into the AND gate as a second input;
inputting the result of the multiplication and the output from the AND gate as respective inputs to the logic block (414);
determining by the logic block if the output from the AND gate is greater than 0 and:
if so, outputting the result of the multiplication as the decrement amount;
if not, outputting a value 0 received at the logic block (414) as the decrement amount (435)
determining a count value based on the increment amount, the decrement amount, and a previous count value;
detecting an overcurrent condition based on the count value and a residual overcurrent limit; and
controlling the generator to open a generator line contactor to remove power from an electrical system sourced by the generator to correct the overcurrent condition responsive to detecting the overcurrent condition.

7. An aircraft comprising:
an electrical load (620); and
a generator (610) to generate electrical power and supply the electrical power to the electrical load, the generator comprising a controller as claimed in claim 6.

## Patentansprüche

1. Verfahren zum Restüberstromschutz, durchgeführt von einer Generatorsteuerung, wobei das Verfahren Folgendes umfasst:
Erfassen eines Eingangsstroms (405) der Generatorsteuerung;
Bestimmen eines Inkrementierungsbetrags für den Restüberstromschutz basierend auf einer Taktgeschwindigkeit, einer Inkrementierungsrate, dem vorherigen Zählwert, dem Restüberstromgrenzwert, dem Eingangsstrom und einer Inkrementierungsschwelle, wobei der Inkrementierungsbetrag durch Folgendes bestimmt wird:
Multiplizieren der Taktgeschwindigkeit (401) und der Inkrementierungsrate (402),
Eingeben des kleineren Werts des vorherigen Zählwerts (403) und des Restüberstromgrenzwerts (404) als einen ersten Eingang in ein UND-Gatter (413);
Eingeben des größeren Werts des Eingangsstroms (405) und der Inkrementierungsschwelle (406) in das UND-Gatter als einen zweiten Eingang;
Eingeben des Ergebnisses der Multiplikation und des Ausgangs des UND-Gatters als jeweilige Eingänge eines Logikblocks (414);
Bestimmen, durch den Logikblock, ob der Ausgang des UND-Gatters größer als 0 ist und:
Wenn dies der Fall ist, Ausgeben des Ergebnisses der Multiplikation als Inkrementierungsbetrag;
Wenn dies nicht der Fall ist, Ausgeben eines an dem Logikblock (414) empfangenen Werts 0 als Inkrementierungsbetrag (415);
Bestimmen eines Dekrementierungsbetrags für den Restüberstromschutz basierend auf der Taktgeschwindigkeit, einer Dekrementierungsrate, dem vorherigen Zählwert, einem konstanten Wert, dem Eingangsstrom und einer Dekrementierungsschwelle;
wobei der Dekrementierungsbetrag durch Folgendes bestimmt wird:
Multiplizieren der Taktgeschwindigkeit (401) und der Dekrementierungsrate (422),
Eingeben des größeren Werts des vorherigen Zählwerts (403) und des konstanten Werts (424) als einen ersten Eingang in das UND-Gatter (413);
Eingeben des kleineren Werts des Eingangsstroms (405) und der Dekrementierungsschwelle (426) in das UND-Gatter als einen zweiten Eingang;
Eingeben des Ergebnisses der Multiplikation und des Ausgangs des UND-Gatters als jeweilige Eingänge des Logikblocks (414);
Bestimmen, durch den Logikblock, ob der Ausgang des UND-Gatters größer als 0 ist und:
Wenn dies der Fall ist, Ausgeben des Ergebnisses der Multiplikation als Dekrementierungsbetrag;
Wenn dies nicht der Fall ist, Ausgeben eines an dem Logikblock (414) empfangenen Werts 0 als Dekrementierungsbetrag (435);
Bestimmen eines Zählwerts basierend auf dem Inkrementierungsbetrag, dem Dekrementierungsbetrag und einem vorherigen Zählwert;
Erkennen eines Überstromzustands basierend auf dem Zählwert und einem Restüberstromgrenzwert; und
Steuern des Generators, um ein Generatorleitungsschütz zu öffnen, um die Stromversorgung eines vom Generator gespeisten elektrischen Systems zu unterbrechen, um als Reaktion auf Erkennen des Überstromzustands den Überstromzustand zu beheben.

2. Verfahren nach Anspruch 1, wobei das Bestimmen des Zählwerts ferner ein Aktualisieren des vorherigen Zählwerts unter Verwendung einer Taktzyklusverzögerung umfasst.

3. Verfahren nach einem der vorhergehenden Ansprüche, wobei das Erkennen des Überstromzustands ein Vergleichen des Zählwerts und des Restüberstromgrenzwerts umfasst.

4. Verfahren nach Anspruch 3, ferner umfassend ein Setzen eines Eingangs eines Speicherglieds der rücksetzdominanten Art auf "wahr" als Reaktion auf das Bestimmen, dass der Zählwert größer oder gleich dem Restüberstromgrenzwert ist.

5. Verfahren nach Anspruch 4, ferner umfassend ein Zurücksetzen des Speicherglieds der rücksetzdominanten Art als Reaktion auf das Setzen eines Rücksetzeingangs auf "wahr".

6. Steuerung, die konfiguriert ist, um Folgendes durchzuführen:
Erfassen eines Eingangsstroms (405) der Generatorsteuerung;
Bestimmen eines Inkrementierungsbetrags für den Restüberstromschutz basierend auf einer Taktgeschwindigkeit, einer Inkrementierungsrate, dem vorherigen Zählwert, dem Restüberstromgrenzwert, dem Eingangsstrom und einer Inkrementierungsschwelle, wobei der Inkrementierungsbetrag durch Folgendes bestimmt wird:
Multiplizieren der Taktgeschwindigkeit (401) und der Inkrementierungsrate (402) mit einem Multiplikator (410),
Eingeben des kleineren Werts des vorherigen Zählwerts (403) und des Restüberstromgrenzwerts (404) als einen ersten Eingang in ein UND-Gatter (413);
Eingeben des größeren Werts des Eingangsstroms (405) und der Inkrementierungsschwelle (406) in das UND-Gatter als einen zweiten Eingang;
Eingeben des Ergebnisses der Multiplikation und des Ausgangs des UND-Gatters als jeweilige Eingänge eines Logikblocks (414);
Bestimmen, durch den Logikblock, ob der Ausgang des UND-Gatters größer als 0 ist und:
Wenn dies der Fall ist, Ausgeben des Ergebnisses der Multiplikation als Inkrementierungsbetrag;
Wenn dies nicht der Fall ist, Ausgeben eines an dem Logikblock (414) empfangenen Werts 0 als Inkrementierungsbetrag (415);
Bestimmen eines Dekrementierungsbetrags für den Restüberstromschutz basierend auf der Taktgeschwindigkeit, einer Dekrementierungsrate, dem vorherigen Zählwert, einem konstanten Wert, dem Eingangsstrom und einer Dekrementierungsschwelle;
wobei der Dekrementierungsbetrag durch Folgendes bestimmt wird:
Multiplizieren der Taktgeschwindigkeit (401) und der Dekrementierungsrate (422) mit dem Multiplikator (410),
Eingeben des größeren Werts des vorherigen Zählwerts (403) und des konstanten Werts (424) als einen ersten Eingang in das UND-Gatter (413);
Eingeben des kleineren Werts des Eingangsstroms (405) und der Dekrementierungsschwelle (426) in das UND-Gatter als einen zweiten Eingang;
Eingeben des Ergebnisses der Multiplikation und des Ausgangs des UND-Gatters als jeweilige Eingänge des Logikblocks (414);
Bestimmen, durch den Logikblock, ob der Ausgang des UND-Gatters größer als 0 ist und:
Wenn dies der Fall ist, Ausgeben des Ergebnisses der Multiplikation als Dekrementierungsbetrag;
Wenn dies nicht der Fall ist, Ausgeben eines an dem Logikblock (414) empfangenen Werts 0 als Dekrementierungsbetrag (435)
Bestimmen eines Zählwerts basierend auf dem Inkrementierungsbetrag, dem Dekrementierungsbetrag und einem vorherigen Zählwert;
Erkennen eines Überstromzustands basierend auf dem Zählwert und einem Restüberstromgrenzwert; und
Steuern des Generators, um ein Generatorleitungsschütz zu öffnen, um die Stromversorgung eines vom Generator gespeisten elektrischen Systems zu unterbrechen, um als Reaktion auf Erkennen des Überstromzustands den Überstromzustand zu beheben.

7. Luftfahrzeug, umfassend:
eine elektrische Last (620); und
einen Generator (610) zum Erzeugen elektrischer Energie und zum Versorgen der elektrischen Last mit der elektrischen Energie, wobei der Generator eine Steuerung nach Anspruch 6 umfasst.

## Revendications

1. Procédé de protection contre les surintensités résiduelles réalisé par un dispositif de commande de générateur, le procédé comprenant :
la détection d'un courant d'entrée (405) du dispositif de commande de générateur ;
la détermination d'une quantité d'incrémentation pour la protection contre les surintensités résiduelles sur la base d'une fréquence d'horloge, d'un taux d'incrémentation, de la valeur de comptage précédente, de la limite de surintensité résiduelle, du courant d'entrée et d'un seuil d'incrémentation, dans lequel la quantité d'incrémentation est déterminée par :
la multiplication de la fréquence d'horloge (401) et du taux d'incrémentation (402),
l'entrée du plus petit du comptage précédent (403) et de la limite de surintensité résiduelle (404) dans une porte ET (413) en tant que première entrée ;
l'entrée du plus grand du courant d'entrée (405) et du seuil d'incrémentation (406) dans la porte ET en tant que seconde entrée ;
l'entrée du résultat de la multiplication et de la sortie de la porte ET en tant qu'entrées respectives d'un bloc logique (414) ;
le fait de déterminer par le bloc logique si la sortie de la porte ET est supérieure à 0 et :
si oui, l'affichage du résultat de la multiplication en tant que quantité d'incrémentation ;
si non, l'affichage d'une valeur 0 reçue au niveau du bloc logique (414) en tant que quantité d'incrémentation (415) ;
la détermination d'une quantité de décrémentation pour la protection contre les surintensités résiduelles sur la base de la fréquence d'horloge, d'un taux de décrémentation, de la valeur de comptage précédente, d'une valeur constante, du courant d'entrée et d'un seuil de décrémentation ;
dans lequel la quantité de décrémentation est déterminée par :
la multiplication de la fréquence d'horloge (401) et du taux de décrémentation (422),
l'entrée du plus grand du comptage précédent (403) et de la valeur constante (424) dans la porte ET (413) en tant que première entrée ;
l'entrée du plus petit du courant d'entrée (405) et du seuil de décrémentation (426) dans la porte ET en tant que seconde entrée ;
l'entrée du résultat de la multiplication et de la sortie de la porte ET en tant qu'entrées respectives du bloc logique (414) ;
le fait de déterminer par le bloc logique si la sortie de la porte ET est supérieure à 0 et :
si oui, l'affichage du résultat de la multiplication en tant que quantité de décrémentation ;
si non, l'affichage d'une valeur 0 reçue au niveau du bloc logique (414) en tant que quantité de décrémentation (435) ;
la détermination d'une valeur de comptage sur la base de la quantité d'incrémentation, de la quantité de décrémentation et d'une valeur de comptage précédente ;
la détection d'une condition de surintensité sur la base de la valeur de comptage et d'une limite de surintensité résiduelle ; et
la commande du générateur pour ouvrir un contacteur de ligne de générateur afin de couper l'alimentation d'un système électrique fourni par le générateur pour corriger la condition de surintensité en réponse à la détection de la condition de surintensité.

2. Procédé selon la revendication 1, dans lequel la détermination de la valeur de comptage comprend en outre la mise à jour de la valeur de comptage précédente à l'aide d'un délai de cycle d'horloge.

3. Procédé selon une quelconque revendication précédente, dans lequel la détection de la condition de surintensité comprend la comparaison de la valeur de comptage et de la limite de surintensité résiduelle.

4. Procédé selon la revendication 3, comprenant en outre, en réponse à la détermination que la valeur de comptage est supérieure ou égale à la limite de surintensité résiduelle, la mise à vrai d'une entrée d'un verrou de type réinitialisation sur réglage.

5. Procédé selon la revendication 4, comprenant en outre la réinitialisation du verrou de type réinitialisation sur réglage en réponse à une entrée de réinitialisation étant mise à vrai.

6. Dispositif de commande configuré pour réaliser les opérations suivantes :
la détection d'un courant d'entrée (405) du dispositif de commande de générateur ;
la détermination d'une quantité d'incrémentation pour la protection contre les surintensités résiduelles sur la base d'une fréquence d'horloge, d'un taux d'incrémentation, de la valeur de comptage précédente, de la limite de surintensité résiduelle, du courant d'entrée et d'un seuil d'incrémentation, dans lequel la quantité d'incrémentation est déterminée par :
la multiplication, par un multiplicateur (410), de la fréquence d'horloge (401) et du taux d'incrémentation (402),
l'entrée du plus petit du comptage précédent (403) et de la limite de surintensité résiduelle (404) dans une porte ET (413) en tant que première entrée ;
l'entrée du plus grand du courant d'entrée (405) et du seuil d'incrémentation (406) dans la porte ET en tant que seconde entrée ;
l'entrée du résultat de la multiplication et de la sortie de la porte ET en tant qu'entrées respectives d'un bloc logique (414) ;
le fait de déterminer par le bloc logique si la sortie de la porte ET est supérieure à 0 et :
si oui, l'affichage du résultat de la multiplication en tant que quantité d'incrémentation ;
si non, l'affichage d'une valeur 0 reçue au niveau du bloc logique (414) en tant que quantité d'incrémentation (415) ;
la détermination d'une quantité de décrémentation pour la protection contre les surintensités résiduelles sur la base de la fréquence d'horloge, d'un taux de décrémentation, de la valeur de comptage précédente, d'une valeur constante, du courant d'entrée et d'un seuil de décrémentation ;
dans lequel la quantité de décrémentation est déterminée par :
la multiplication, par un multiplicateur (410), de la fréquence d'horloge (401) et du taux de décrémentation (422),
l'entrée du plus grand du comptage précédent (403) et de la valeur constante (424) dans la porte ET (413) en tant que première entrée ;
l'entrée du plus petit du courant d'entrée (405) et du seuil de décrémentation (426) dans la porte ET en tant que seconde entrée ;
l'entrée du résultat de la multiplication et de la sortie de la porte ET en tant qu'entrées respectives du bloc logique (414) ;
le fait de déterminer par le bloc logique si la sortie de la porte ET est supérieure à 0 et :
si oui, l'affichage du résultat de la multiplication en tant que quantité de décrémentation ;
si non, l'affichage d'une valeur 0 reçue au niveau du bloc logique (414) en tant que quantité de décrémentation (435)
la détermination d'une valeur de comptage sur la base de la quantité d'incrémentation, de la quantité de décrémentation et d'une valeur de comptage précédente ;
la détection d'une condition de surintensité sur la base de la valeur de comptage et d'une limite de surintensité résiduelle ; et
la commande du générateur pour ouvrir un contacteur de ligne de générateur afin de couper l'alimentation d'un système électrique fourni par le générateur pour corriger la condition de surintensité en réponse à la détection de la condition de surintensité.

7. Aéronef comprenant :
une charge électrique (620) ; et
un générateur (610) pour générer de l'énergie électrique et fournir l'énergie électrique à la charge électrique, le générateur comprenant un dispositif de commande selon la revendication 6.
